# EUROPEAN PATENT APPLICATION

(11) **EP 4 258 767 A1**
(43) Date of publication of application: **11.10.2023**
(21) Application number: 20963937.6
(22) Date of filing: 03.12.2020
(51) Int. Cl.: H04W 68/00, H04L 5/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); HE, Chuanfeng, Dongguan, Guangdong 523860 (CN); ZUO, Zhisong, Dongguan, Guangdong 523860 (CN)
(74) Representative: Neusser, Sebastian
(86) International application number: PCT/CN2020/133642
(87) International publication number: WO 2022/116090

(57) **Abstract**

The embodiments of the present disclosure provide a wireless communication method, a terminal device, and a network device, capable of avoiding monitoring a paging message at a paging occasion when the terminal device doesn't need to receive the paging message, thereby achieving power saving of the terminal. The wireless communication method includes: receiving, by a terminal device, indication information, the indication information indicating whether to monitor a paging message, and/or the indication information indicating an available reference signal.

## Description

### TECHNICAL FIELD

The embodiments of the present disclosure relate to communication technology, and more particularly, to a wireless communication method, a terminal device and a network device.

### BACKGROUND

When a terminal device is in a Radio Resource Control (RRC) idle state or RRC inactive state, the terminal device needs to continuously monitor a paging message according to a periodicity of the paging message. However, the terminal device only occasionally has traffic and is thus paged, so most of the time when the terminal device monitors the paging message, there is no corresponding paging message, which objectively provides room for power consumption optimization. How to avoid monitoring the paging message when there is no paging message for the terminal device is a problem to be solved.

### SUMMARY

Embodiments of the present disclosure provide a wireless communication method, a terminal device, and a network device, capable of avoiding monitoring a paging message at a paging occasion when a terminal device does not need to receive the paging message, thereby achieving power saving of the terminal.

In a first aspect, a wireless communication method is provided. The method includes: receiving, by a terminal device, indication information, the indication information indicating whether to monitor a paging message, and/or the indication information indicating an available reference signal.

In a second aspect, a wireless communication method is provided. The method includes: transmitting, by a network device, indication information, the indication information indicating whether to monitor a paging message, and/or the indication information indicating an available reference signal.

In a third aspect, a terminal device is provided. The terminal device is configured to perform the method according to the above first aspect.

In particular, the terminal device includes one or more functional modules configured to perform the method according to the above first aspect.

In a fourth aspect, a network device is provided. The network device is configured to perform the method according to the above second aspect.

In particular, the network device includes one or more functional modules configured to perform the method according to the above second aspect.

In a fifth aspect, a terminal device is provided. The terminal device includes a processor and a memory. The memory has a computer program stored thereon, and the processor is configured to invoke and execute the computer program stored in the memory to perform the method according to the above first aspect.

In a sixth aspect, a network device is provided. The network device includes a processor and a memory. The memory has a computer program stored thereon, and the processor is configured to invoke and execute the computer program stored in the memory to perform the method according to the above second aspect.

In a seventh aspect, an apparatus is provided. The apparatus is configured to perform the method according to any of the above first to second aspects.

In particular, the apparatus includes a processor configured to invoke and execute a computer program from a memory, to cause a device provided with the apparatus to perform the method according to any of the above first to second aspects.

In an eighth aspect, a computer-readable storage medium is provided. The computer-readable storage medium stores a computer program that causes a computer to perform the method according to any of the above first to second aspects.

In a ninth aspect, a computer program product is provided. The computer program product includes computer program instructions that cause a computer to perform the method according to any of the above first to second aspects.

In a tenth aspect, a computer program is provided. The computer program, when executed on a computer, causes the computer to perform the method according to any of the above first to second aspects.

With the above technical solution, the terminal device can determine whether to monitor the paging message based on the indication information, That is, when the terminal device does not need to receive the paging message, it can avoid monitoring the paging message at the paging occasion, thereby achieving power saving of the terminal; and/or when the terminal device is in the RRC idle state or in the RRC inactive state, the network device can indicate the available reference signal to the terminal device, thereby improving the performance of communication.

### BRIEF DESCRIPTION OF DRAWINGS

FIG. 1 is a schematic diagram showing a communication system architecture where an embodiment of the present disclosure is applied.
FIG. 2 is a schematic diagram showing paging occasions and SSBs according to the present disclosure.
FIG. 3 is a schematic diagram showing a Discontinuous Reception (DRX) according to the present disclosure.
FIG. 4 is a schematic diagram showing a power-saving signal controlled DRX according to the present disclosure.
FIG. 5 is a schematic flowchart illustrating a wireless communication method according to an embodiment of the present disclosure.
FIG. 6 is a schematic diagram showing a Paging Early Indication (PEI) indicating whether to monitor a paging message according to an embodiment of the present disclosure.
FIG. 7 is a schematic diagram showing time-frequency synchronization based on SSBs according to an embodiment of the present disclosure.
FIG. 8 is a schematic diagram showing time-frequency synchronization based on SSBs and CSI-RSs according to an embodiment of the present disclosure.
FIG. 9 is a schematic diagram showing carrying PEI information in a paging Physical Downlink Control Channel (PDCCH) according to an embodiment of the present disclosure.
FIG. 10 is a schematic diagram showing PEI information according to an embodiment of the present disclosure.
FIG. 11 is a schematic diagram showing a correspondence between PDCCHs carrying PEI information and POs according to an embodiment of the present disclosure.
FIG. 12 is a schematic diagram showing another correspondence between PDCCHs carrying PEI information and POs according to an embodiment of the present disclosure.
FIG. 13 is a schematic diagram showing yet another correspondence between PDCCHs carrying PEI information and POs according to an embodiment of the present disclosure.
FIG. 14 is a schematic diagram showing a further correspondence between PDCCHs carrying PEI information and POs according to an embodiment of the present disclosure.
FIG. 15 is a schematic block diagram of a terminal device according to an embodiment of the present disclosure.
FIG. 16 is a schematic block diagram of a network device according to an embodiment of the present disclosure.
FIG. 17 is a schematic block diagram of a communication device according to an embodiment of the present disclosure.
FIG. 18 is a schematic block diagram of an apparatus according to an embodiment of the present disclosure.
FIG. 19 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Network (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may also be referred to as a User Equipment (UE), an access terminal, a user unit, a user station, a mobile station, a remote station, a remote terminal, a mobile device, a user terminal, a terminal, a wireless communication device, a user agent, or a user device.

The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self driving, a wireless terminal device in remote medical care, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on the body or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

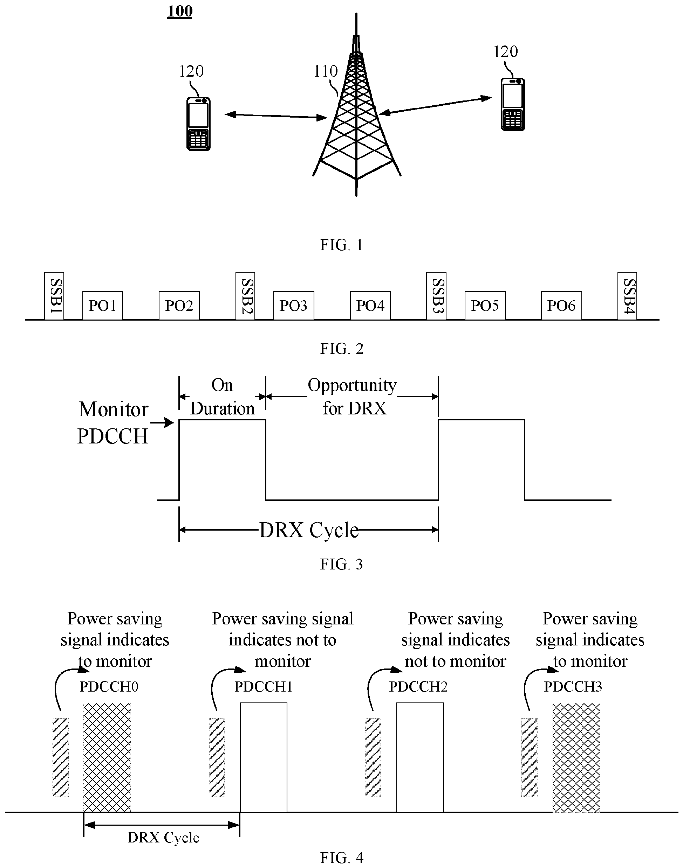

Exemplarily, FIG. 1 shows a communication system 100 in which an embodiment of the present disclosure can be applied. A shown in FIG. 1, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. Optionally, the communication system 100 may include multiple network devices, and the coverage of each network device may include other numbers of terminal devices. The embodiment of the present disclosure is not limited to this.

Optionally, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "f' as used herein represents an "or" relationship between the correlated objects preceding and succeeding the symbol.

The terms used in the embodiments of the present disclosure are provided only for explaining the specific embodiments of the present disclosure, rather than limiting the present disclosure. The terms such as "first", "second", "third", "fourth", etc., as used in the description, claims and figures of the present disclosure are used for distinguishing different objects from each other, rather than defining a specific order. In addition, the terms such as "include" and "have" and any variants thereof are intended to cover non-exclusive inclusion.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between two elements, or may mean that there is an association between the two, or that they are in a relation of indicating and being indicated, configuring and being configured, or the like.

In the embodiments of the present disclosure, "predefined" may implemented by pre-storing in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In order to better understand the embodiments of the present disclosure, the NR paging process related to the present disclosure will be described.

Paging messages in NR are periodically transmitted to terminals, and positions at which the paging messages are monitored are Paging Occasions (POs). PO positions of a user are related to a user Identity (ID), and the POs of different users are discretely scattered within a paging cycle, as shown in FIG. 2.

To facilitate better understanding of the embodiments of the present disclosure, Discontinuous Reception (DRX) related to the present disclosure will be described.

For power saving of terminals, a DRX transmission mechanism is introduced in LTE. When there is no data transmission, the power consumption can be reduced by stopping receiving the Physical Downlink Control Channel (PDCCH) (blind detection of the PDCCH will be stopped in this case), thereby improving the battery work time. The basic mechanism of DRX is to configure a DRX cycle for a terminal device in an RRC connected state. As shown in FIG. 3, the DRX cycle consists of an "On Duration" and an "Opportunity for DRX". In the "On Duration" period, the terminal device monitors and receives the PDCCH (active period), and in the "Opportunity for DRX" period, the terminal device does not receive the PDCCH to reduce power consumption (sleep period). In addition, the transmission of the paging message is also a DRX mechanism in the RRC idle state, and the DRX cycle in this case is the cycle of the paging message. It can be seen from FIG. 3 that in the time domain, time is divided into successive DRX cycles.

In order to better understand the embodiments of the present disclosure, the terminal power saving mechanism related to the present disclosure will be described.

Since the power consumption in the connected state accounts for the majority of the power consumption of an NR terminal, the NR Release16 (Rel-16) power saving signal is also used for power saving when the terminal is in the RRC connected state.

The traditional terminal power saving mechanism is mainly DRX. When DRX is configured, the terminal monitors the PDCCH during the DRX ON Duration. If the terminal receives data scheduling in the ON Duration, the terminal continues to monitor the PDCCH based on the control of the DRX timer until the data transmission is completed; otherwise, if the terminal does not receive data scheduling in the DRX ON Duration, the terminal enters DRX (discontinuous reception) to achieve power saving. Thus, DRX is a power saving control mechanism with the DRX cycle as the time granularity, and therefore cannot achieve optimal power consumption control. For example, even if the terminal has no data scheduling, the terminal still needs to monitor the PDCCH while the DRX ON Duration timer, which is periodically started, is running, and thus there is still power waste.

In order to achieve further power saving of the terminal, NR power saving enhancement introduces a power saving signal, which is used in conjunction with the DRX mechanism. The specific technical principle is that the terminal receives an indication of the power saving signal before the DRX ON Duration. As shown in FIG. 4, when the terminal has data transmission in a DRX cycle, the power saving signal "wakes up" the terminal to monitor the PDCCH in the DRX ON Duration; otherwise, when the terminal has no data transmission in a DRX cycle, the power saving signal does not "wake up" the terminal, and the terminal does not need to monitor PDCCH in the DRX ON Duration. Compared with the existing DRX mechanism, when the terminal has no data transmission, the terminal can omit PDCCH monitoring in the DRX ON Duration, thereby achieving power saving. The time before the DRX ON Duration of the terminal is called inactive time. The time during which the terminal is in the DRX ON Duration is called inactive time.

The power saving technology of Rel-16 is mainly provided for terminals in the RRC connected state, and the power saving optimization is carried out for the DRX mechanism.

However, when the terminal is in the RRC idle or RRC inactive state, the terminal device needs to continuously monitor a paging message according to a periodicity of the paging message. However, the terminal device only occasionally has traffic and is thus paged, so most of the time when the terminal device monitors the paging message there is no corresponding paging message, which objectively provides room for power consumption optimization, i.e., how to avoid monitoring the paging message when there is no paging message for the terminal, so as to achieve power saving.

In view of the above problems, the present disclosure proposes a paging indicating solution, capable of achieving power saving when receiving a paging message.

The technical solutions of the present disclosure will be described in detail below with reference to specific embodiments.

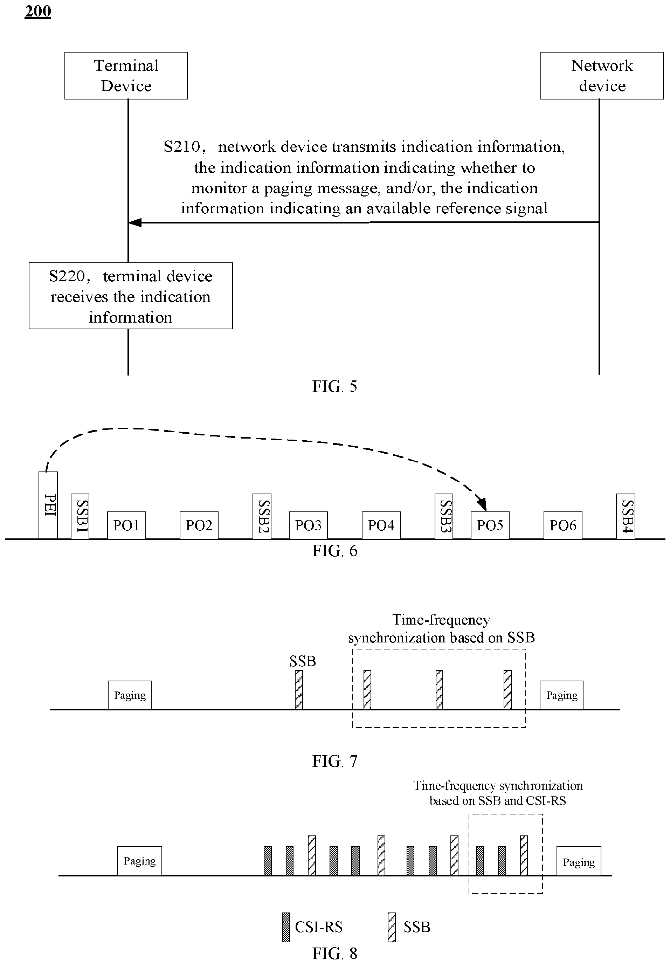

FIG. 5 is a schematic flowchart illustrating a wireless communication method 200 according to an embodiment of the present disclosure. As shown in FIG. 5, the method 200 may include at least a part of the following content.

At S210, a network device transmits indication information. The indication information indicates whether to monitor a paging message, and/or the indication information indicates an available reference signal.

At S220, a terminal device receives the indication information.

In the embodiment of the present disclosure, the terminal device can determine whether to monitor the paging message, and/or obtain the available reference signal based on the indication information.

Optionally, the terminal device is in an idle state or an inactive state. Alternatively, the terminal device is in an RRC idle or RRC inactive state.

Optionally, the available reference signal is used for time-frequency synchronization and/or Radio Resource Management (RRM) measurement by the terminal device when receiving the paging message. That is, after obtaining the available reference signal, the terminal device may perform, based on the available reference signal, time-frequency synchronization and/or RRM measurement when receiving the paging message, thereby improving the efficiency of receiving the paging message.

Optionally, the available reference signal may include, but not limited to, at least one of: Tracking Reference Signal (TRS) or Channel State Information Reference Signal (CSI-RS).

For example, the available reference signal may be a reference signal configured by the network device for a terminal in the RRC connected state for time-frequency synchronization, and the terminal device in the RRC idle or RRC inactive state can obtain the available reference signal (CSI-RS/TRS) based on the indication information. Before receiving the paging message, the terminal device can not only use Synchronization Signal/Physical Broadcast Channel block (SS/PBCH block) for time-frequency synchronization, but also use the available reference signal, such as CSI-RS/TRS, to achieve time-frequency synchronization. Therefore, the terminal device is expected to achieve time-frequency synchronization in a relatively short period of time by using enough reference signals (CSI-RS and/or SSB), such that power saving of the terminal device can be achieved.

Optionally, the available reference signal may include an available reference signal from a plurality of reference signals, and configuration information for the plurality of reference signals (such as time domain positions of the reference signals) may be configured by a network device via system information or RRC signaling.

For example, the network device configures Reference Signal 1, Reference Signal 2, Reference Signal 3, Reference Signal 4, Reference Signal 5, and Reference Signal 6 via system information or RRC signaling, and the network device indicates the available reference signal via 6 bits in an information field corresponding to the indication information. Here, each of the 6 bits corresponds to a reference signal, and the value of any of the 6 bits being 1 indicates that the corresponding reference signal is available, and the value of 0 indicates that the corresponding reference signal is not available, or vice versa.

That is, the network device may use the indication information to indicate the available reference signal from the plurality of reference signals, so as to avoid the signaling overhead caused by directly indicating the available reference signal.

Optionally, the indication information may be Paging Early Indication (PEI) information. Of course, the indication information may be other types of information, and the present disclosure is not limited to this.

PEI information can be transmitted before the PO position where the terminal device receives the paging message. When there is no paging message for the terminal device, the PEI information indicates that the terminal device does not have a paging message, or instructs the terminal device not to receive a paging message, that is, not to receive a PDCCH scheduling the paging message. On the other hand, when the terminal device has a paging message to receive, the PEI information indicates that the terminal device has the paging message, or instructs the terminal device to receive the paging message, that is, to receive a PDCCH scheduling the paging message.

It should be noted that when the terminal device is in the RRC idle or RRC inactive state, the terminal device only needs to monitor the paging message in the PO, and the PO typically corresponds to one time slot or several symbols, and thus is relatively short in time. Therefore, if a power-saving signal is transmitted directly before the PO, it simply replaces the paging reception in the PO, and thus may not necessarily bring power-saving gain to the terminal. However, the terminal device also needs to perform time-frequency synchronization based on Synchronization Signal/Physical Broadcast Channel (SS/PBCH) blocks before receiving the paging message, so the terminal device generally needs to start the time-frequency synchronization operation several Synchronization Signal Block (SSB) cycles earlier than the PO. As shown in FIG. 2, assuming that the paging reception position of the terminal device is the position PO 5 in FIG. 2, in order to perform the synchronization operation, the terminal device may need to receive SSB1, SSB2 and SSB3 before POS.

Therefore, in a case where the terminal device actually has no paging message in a PO, if the network device can transmit PEI several SSB cycles in advance, the terminal device can avoid performing synchronization operations. As shown in FIG. 6, as an example, if the network device indicates that the terminal device has no paging message, assuming that the position of the terminal device's paging reception is the position of PO 5 in FIG. 6, the terminal device can omit the reception and processing of SSB 1, SSB2, SSB3. In this way, the terminal can achieve considerable power saving.

Before receiving the system message or the paging message, NR terminal devices in the RRC idle state or in the RRC inactive state can only use SS/PBCH block to achieve time-frequency synchronization. However, because of the large cycle of SS/PBCH block, at least 5ms, typically 10ms or 20ms, before receiving the system message or the paging message the terminal devices need to perform reception of SS/PBCH tens or even hundreds of milliseconds (ms) in advance for time-frequency synchronization operation. Thus, before receiving the system message or the paging message, the terminal devices need to wake up tens or even hundreds of milliseconds (ms) in advance for time-frequency synchronization operation. In this way, the terminal devices consume more power when receiving the system message or the paging message. For example, as shown in FIG. 7, the terminal device needs to receive SSBs in 3 SSB cycles for time-frequency synchronization before receiving the paging message. Assuming that the period of the SS/PBCH block is 20ms, that means the terminal device needs to receive the SS/PBCH block 60 ms in advance for time-frequency synchronization operation.

On another hand, the network device can transmit CSI-RSs or TRSs to terminal devices in the RRC connected state, and can transmit different CSI-RS signals to different terminal devices. If these CSI-RSs can be used by an NR terminal device in the RRC idle or RRC inactive state, the reference signals available to the NR terminal device in the RRC idle or RRC inactive state can be increased, thereby potentially reducing the time required for the terminal to achieve time-frequency synchronization, allowing power saving of the terminal. For example, as shown in FIG. 8, if the terminal device uses the SSBs for time-frequency synchronization before receiving the paging message, it may also use the reference signal, such as CSI-RS/TRS, to achieve time-frequency synchronization. This way, the terminal device is expected to achieve time-frequency synchronization in a relatively short period of time by using enough reference signals (CSI-RS and/or SSB), such that power saving of the terminal device can be achieved.

On the other hand, there may be a large number of terminals in the RRC idle state or in the RRC inactive state for the network device, and the POs of different terminals are distributed in different time positions. In order to meet the needs of different terminals, it is necessary to transmit PEI information at the time positions of the POs corresponding to different terminals. Therefore, transmitting PEI information inevitably raises network overhead problems. For NR systems, it is necessary to indicate the beam scanning of multiple beams, and thus it is also necessary to support the beam scanning transmission of PEI information, which further aggravates the overhead problem caused by PEI information transmission.

It should be noted that in Release15 (Rel-15) and Release16 (Rel-16), there are 15 bits reserved in the Downlink Control Information (DCI) format 1_0 for scheduling systeme information. Thus when DCI format 1_0 is used for scheduling system information, DCI still has 15 bits as reserved bits, and these reserved bits do not carry scheduling information. In addition, the PDCCH for scheduling system information is also transmitted periodically. Taking PDCCH for scheduling Remaining System Information (RMSI) (SIB 1) as an example, when the multiplexed pattern of SSB and Control Resource Set (CORESET) 0 is pattern 1 (that is, SSB and CORESETO are time-division multiplexed), the periodicity of the search space of the PDCCH scheduling the System Information Block (SIB) is 2 radio frames, that is, 20ms. When the multiplexed pattern of SSB and CORESETO is pattern 2 or 3 (that is, SSB and CORESETO are frequency-division multiplexed), the periodicity of the search space of PDCCH scheduling SIB is equal to the periodicity of the SSB, which is 5ms, 10ms, 20ms... 160ms, with the SSB periodicity for initial access to a cell being typically 20ms. In addition, PDCCH scheduling system information also supports transmission in the manner of beam scanning in order to cover the complete NR cell. And the number of beams and beam width for transmitting system information are usually the same as the number of beams and beam width for transmitting the paging message.

It can be seen that taking into account the above factors, PDCCH scheduling system information that is periodically transmitted provides an excellent choice for carrying PEI information. The embodiments of the present disclosure may reuse the reserved bits in the DCI format 1_0 for scheduling system information to carry PEI information. That is, the reserved bits in the DCI format 1_0 for scheduling system information are given a new meaning or purpose to carry PEI information.

Optionally, in some embodiments, the indication information (such as PEI information) may be carried in DCI for scheduling system information. For example, the indication information may occupy part or all of the reserved bits in the DCI for scheduling the system information. Here, the reserved bits are not used for scheduling the system information.

The DCI for scheduling the system information is DCI format 1_0, and Cyclical Redundancy Check (CRC) of the DCI format 1_0 is scrambled by System Information Radio Network Temporary Identity (SI-RNTI).

Optionally, in some embodiments, the PDCCH carrying the indication information (such as PEI information) may be a PDCCH for scheduling a paging message, i.e., a PDCCH carrying DCI with the DCI's CRC check bits scrambled with a P-RNTI. In this case, the indication information (such as PEI information) may be carried in the DCI for scheduling the paging message. For example, the indication information may occupy part or all of the reserved bits in the DCI for scheduling the paging message. Here, the reserved bits are not used for scheduling the paging message.

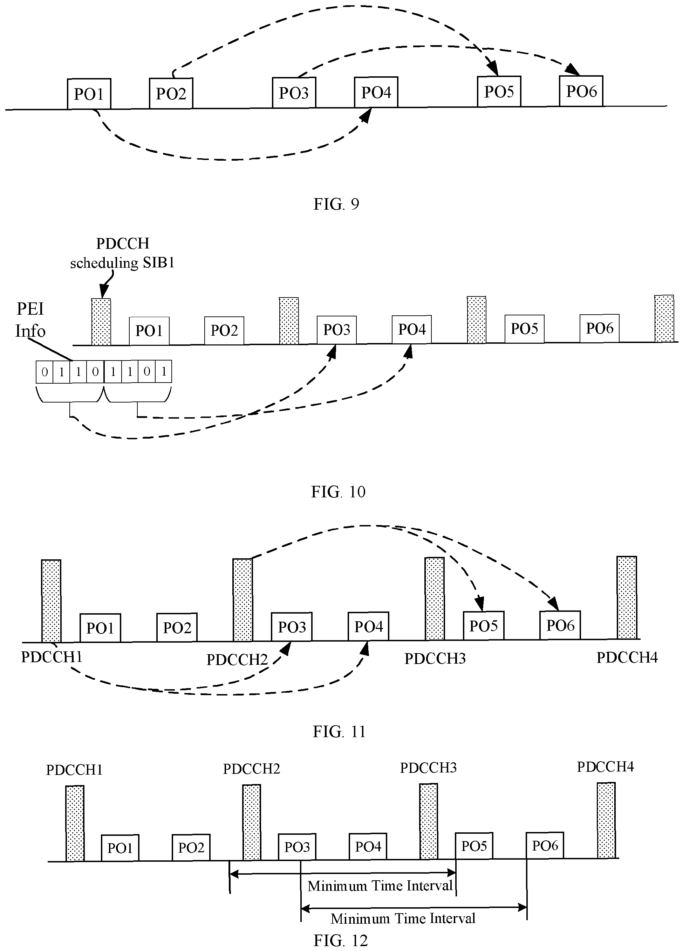

As an example, a PDCCH for scheduling paging at an earlier PO may be used to carry the PEI information corresponding to a later PO, and the position relationship between the PO and the PEI information may be predetermined or configured. As shown in FIG. 9, the PDCCH for scheduling the paging message at PO1 carries PEI 1, which indicates whether to monitor the paging message at PO4; the PDCCH for scheduling the paging message at PO2 carries PEI 2, which indicates whether to monitor the paging message at POS; and the PDCCH for scheduling the paging message at PO3 carries PEI 3, which indicates whether to monitor the paging message at PO6.

Optionally, in some embodiments, the PDCCH carrying the indication information (such as PEI information) may be a specially configured PDCCH dedicated to carrying the indication information. The search space and CORESET for the PDCCH dedicated to carrying the indication information can be configured by a network device via system information or RRC signaling.

Optionally, a bit position and/or a number of bits occupied by the indication information (such as PEI information) is preconfigured or agreed in a protocol, or a bit position and/or a number of bits occupied by the indication information (such as PEI information) is configured by a network device.

Optionally, the system information includes at least one of: System Information Block (SIB) 1, SIB 2, SIB 3, SIB 4, or Other System Information (OSI).

Optionally, in some embodiments, when the indication information (such as PEI information) indicates whether to monitor the paging message, the bits occupied by the indication information satisfy at least one of the following correspondences:
different bits in the bits occupied by the indication information correspond to different terminals;
different bits in the bits occupied by the indication information correspond to different terminal groups;
different bits in the bits occupied by the indication information correspond to different paging frames; or
different bits in the bits occupied by the indication information correspond to different paging occasions.

Optionally, when different bits in the bits occupied by the indication information correspond to different terminals, bit values of the bits occupied by the indication information indicate whether the corresponding terminals are to monitor the paging message. For example, the bit value being 0 means that the corresponding terminal monitors the paging message; and the bit value being 1 means that the corresponding terminal doesn't monitor the paging message; or vice versa.

Optionally, when different bits in the bits occupied by the indication information correspond to different terminal groups, bit values of the bits occupied by the indication information indicate whether terminals in the corresponding terminal groups are to monitor the paging message. For example, the bit value being 0 means that the terminals in the corresponding terminal group monitors the paging message; and the bit value being 1 means that the terminals in the corresponding terminal group doesn't monitor the paging message; or vice versa.

Optionally, when different bits in the bits occupied by the indication information correspond to different paging frames, bit values of the bits occupied by the indication information indicate whether the terminal device is to monitor the paging message on the corresponding paging frames. For example, the bit value being 0 means that the terminal device monitors the paging message on the corresponding paging frame; and the bit value being 1 means that the terminal device doesn't monitor the paging message on the corresponding paging frame; or vice versa.

Optionally, when different bits in the bits occupied by the indication information correspond to different paging occasions, bit values of the bits occupied by the indication information indicate whether the terminal device is to monitor the paging message in the corresponding paging occasions. For example, the bit value being 0 means that the terminal device monitors the paging message in the corresponding paging occasion; and the bit value being 1 means that the terminal device doesn't monitor the paging message in the corresponding paging occasion; or vice versa.

Optionally, in some embodiments, when the indication information (such as PEI information) indicates whether to monitor the paging message, the bits occupied by the indication information include N groups of bits, and each of the N groups of bits includes M bits, where N and M are positive integers. Each of the N groups of bits corresponds to one paging occasion, and each of the M bits corresponds to one terminal or one terminal group.

Optionally, bit values of the bits occupied by the indication information indicate whether the corresponding terminals or terminals in the corresponding terminal groups are to monitor the paging message in the corresponding paging occasions. For example, the bit value being 0 means that the corresponding terminal or the terminals in the corresponding terminal group monitor the paging message in the corresponding paging occasion; and the bit value being 1 means that the corresponding terminal or the terminals in the corresponding terminal group do not monitor the paging message in the corresponding paging occasion; or vice versa.

For example, as shown in FIG. 10, the indication information (such as PEI information) is carried in the DCI for scheduling SIB 1. The DCI is carried by the PDCCH. The PEI information occupies 8 bits in total, among which the first 4 bits correspond to PO3 and indicate whether terminals or terminals in terminal groups receive the paging message at PO3, and the last 4 bits correspond to PO4 and indicate whether terminals or terminals in terminal groups receive the paging message at PO4. The first/last 4 bits corresponds respectively to 4 terminal groups at the corresponding PO, denoted as: Terminal Group 1, Terminal Group 2, Terminal Group 3, and Terminal Group 4, respectively.

Optionally, the correspondence satisfied by the bits occupied by the indication information may be pre-configured, or agreed in a protocol. Alternatively, the correspondence satisfied by the bits occupied by the indication information may be configured by a network device via RRC signaling or broadcast signaling. For example, the correspondence may be the correspondence between the bits occupied by the indication information and the terminals, or the correspondence between the bits occupied by the indication information and the terminal groups, or the correspondence between the bits occupied by the indication information and the paging frames, or the correspondence between the bits occupied by the indication information and the paging occasions, or the correspondence between the bits occupied by the indication information and the paging occasions and the terminals or terminal groups.

In some embodiments, the terminal groups are divided by: determining indices of the terminal groups based on identifiers of terminals; or determining indices of the terminal groups based on access classes of terminals.

For example, the index of the terminal group may be determined as the terminal identifier (UE ID) modulo X, where X is the total number of groups.

In another example, the index of the terminal group may be determined as a result of applying a first processing on the terminal identifier (UE ID) or the result modulo X, where X is the total number of groups. Here, the first processing may be dividing the terminal identifier (UE ID) by Y, or rounding-down of the terminal identification (UE ID) divided by Y, where Y is the number of POs in a paging cycle.

In another example, the terminal groups may be divided based on access classes of terminals. For example, an access class may have a one-to-one correspondence to an index of the terminal group.

Optionally, in some embodiments, a correspondence between a Physical Downlink Control Channel (PDCCH) carrying the DCI (carrying the indication information) and a paging occasion indicated by the indication information is preconfigured or agreed in a protocol, or a correspondence between a PDCCH carrying the DCI (carrying the indication information) and a paging occasion indicated by the indication information is configured by a network device. For example, as shown in FIG. 11, PDCCH 1 carrying the indication information (such as PEI information) corresponds to PO3 and PO4, and PDCCH 2 carrying the indication information (such as PEI information) corresponds to PO5 and PO6.

Optionally, the correspondence between the PDCCH carrying the DCI (carrying the indication information) and the paging occasion indicated by the indicated information includes at least one of:

a time interval or a minimum time interval between a monitoring occasion of the PDCCH (PDCCH monitoring occasion) and the paging occasion indicated by the indicated information; or
a number of paging occasions corresponding to the PDCCH.

Optionally, the time interval or the minimum time interval between the monitoring occasion of the PDCCH and the paging occasion indicated by the indicated information includes one of:
the time interval or the minimum time interval between the monitoring occasion of the PDCCH and the paging occasion indicated by the indicated information;
a time interval or a minimum time interval between the monitoring occasion of the PDCCH and a first paging occasion indicated by the indicated information;
a time interval or a minimum time interval between the monitoring occasion of the PDCCH and a radio frame on which the paging occasion indicated by the indication information is located; or
a time interval or a minimum time interval between a radio frame on which the PDCCH is located and a radio frame on which the paging occasion indicated by the indication information is located.

It should be noted that the time interval or minimum time interval between the PDCCH monitoring occasion and the paging occasion indicated by the indication information may specifically be: a time interval or minimum time interval between the start symbol or end symbol of the PDCCH monitoring occasion and the start time or start position of the paging occasion indicated by the indication information. The time interval or minimum time interval between the PDCCH monitoring occasion and the first paging occasion indicated by the indication information may specifically be: a time interval or minimum time interval between the start symbol or end symbol of the PDCCH monitoring occasion and the start time or start position of the first paging occasion indicated by the indication information. The time interval or minimum time interval between the PDCCH monitoring occasion and the radio frame where the paging occasion indicated by the indication information is located may specifically be: a time interval or minimum time interval between the start symbol or end symbol of the PDCCH monitoring occasion and the radio frame where the paging occasion indicated by the indication information is located.

For example, the indication information may indicate one paging occasion. In this case, the time interval between the PDCCH monitoring occasion and the paging occasion indicated by the indication information may specifically refer to: a time interval between the PDCCH monitoring occasion and the one paging occasion indicated by the indication information. Specifically, the terminal device can obtain a time point t by going backward a time interval from the start time position of the paging occasion (PO), and the monitoring occasion of the PDCCH (carrying the PEI information of the terminal device) should be the last PDCCH monitoring occasion before the time point t.

In another example, the indication information may indicate a plurality of paging occasions. In this case, the time interval between the PDCCH monitoring occasion and the paging occasion indicated by the indication information may specifically refer to: a time interval between the PDCCH monitoring occasion and the first paging occasion indicated by the indication information. In this case, other corresponding paging occasions may be determined according to the number of paging occasions corresponding to the PDCCH carrying the indication information. As shown in FIG. 11, the interval between PDCCH 1 carrying the PEI information and the indicated first PO is 20 ms, and if the corresponding number of POs is 2, PO3 and PO4 which are 20 ms later are indicated. Specifically, the terminal device can obtain a time point t by going backward the time interval from the start time position of the first PO, and the monitoring occasion of PDCCH (carrying the PEI information of the terminal device) should be the last PDCCH monitoring occasion before the time point t.

For another example, in some configurations, the time interval between the PDCCH monitoring occasion and the paging occasion indicated by the indication information, or the time interval between the radio frame where the PDCCH is located and the paging occasion indicated by the indication information, or the time interval between the PDCCH monitoring occasion and the first paging occasion indicated by the indication information, or the time interval between the radio frame where the PDCCH is located and the radio frame where the paging occasion indicated by the indication information is located, may not be a fixed value, and may vary as the PDCCH monitoring occasion changes. For example, the distribution of POs in different time periods may not be uniform due to the uplink-downlink configuration in a Time Division Duplex (TDD) system. In this case, the minimum time interval can be used as a constraint. That is, the time interval between the PDCCH monitoring occasion and the paging occasion indicated by the indication information, the time interval between the radio frame where the PDCCH is located and the paging occasion indicated by the indication information, or the time interval between the PDCCH monitoring occasion and the first paging occasion indicated by the indication information, or the time interval between the radio frame where the PDCCH is located and the radio frame where the paging occasion indicated by the indication information is located, is not smaller than the minimum time interval. The minimum time interval may be configured by a network device, or may be predefined. In this case, the terminal device can confirm the PDCCH monitoring occasion based on the PO time position at which the paging message is received and the minimum time interval. Generally, a time point t can be obtained by going backward the minimum time interval from the start time position of the PO, and the monitoring occasion of PDCCH carrying the PEI of the terminal should be the last PDCCH monitoring occasion before the time point t. It should be noted that in the NR system, the PDCCH monitoring occasion for scheduling system information is located in type0 PDCCH search space, and due to the beam scanning requirements, a plurality of PDCCH monitoring occasions may be included in each type0 PDCCH search space periodicity. In this case, the terminal device may determine the PDCCH monitoring occasion based on one of the following criteria: 1) the determined PDCCH monitoring occasion is the last PDCCH monitoring occasion before the time point t (possibly including only part of the PDCCH monitoring occasions in one type0 PDCCH search space periodicity); 2) the determined PDCCH monitoring occasions are the PDCCH monitoring occasions in the type0 PDCCH search space periodicity that are the last PDCCH monitoring occasions before the time point t and include all of the PDCCH monitoring occasions in one type0 PDCCH search space periodicity.

For example, as shown in FIG. 12, a minimum time interval needs to be satisfied between the PDCCH monitoring occasion (the PDCCH including the DCI carrying the PEI information) and the paging occasion (PO) indicated by the PEI information. Therefore, for POS, its corresponding PDCCH monitoring occasion is located at PDCCH1 in FIG. 12; and for PO6, its corresponding PDCCH monitoring occasion is located at PDCCH 2 in FIG. 12.

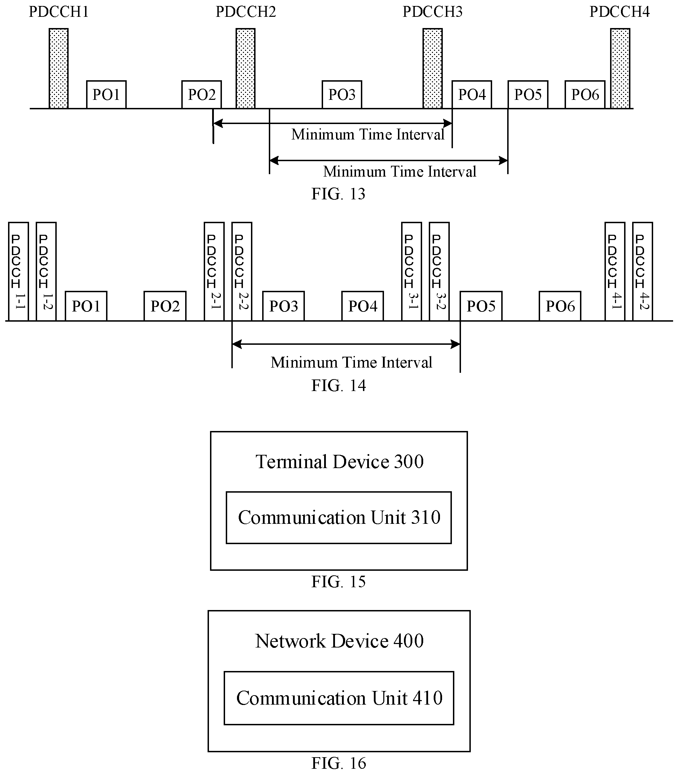

In another example, as shown in FIG. 13, a minimum time interval needs to be satisfied between the PDCCH monitoring occasion (the PDCCH including the DCI carrying the PEI information) and the paging occasion (PO) indicated by the PEI information. Therefore, for POS, its corresponding PDCCH monitoring occasion is located at PDCCH1 in FIG. 13; and for PO6, its corresponding PDCCH monitoring occasion is located at PDCCH2 in FIG. 13.

When each type0 PDCCH search space periodicity includes a plurality of PDCCH monitoring occasions, as shown in FIG. 14, each type0 PDCCH search space periodicity will include 2 PDCCH monitoring occasions. For POS, when the above first criterion is used, a time point t can be obtained by going backward the minimum time interval from the start time position of POS, and the PDCCH (carrying the PEI information of the terminal device) monitoring occasion should be the last PDCCH monitoring occasion before the time point t. That is, the determined PDCCH monitoring occasion is PDCCH 2-1 in the corresponding PDCCH 2. When the second criterion is used, a time point t can be obtained by going backward the minimum time interval from the start time position of POS, and the PDCCH (carrying the PEI information of the terminal device) monitoring occasion should be the PDCCH monitoring occasions in one type0 PDCCH search space periodicity that are the last PDCCH monitoring occasions before the time point t and include two PDCCH monitoring occasions, that is, the determined PDCCH monitoring occasions are PDCCH 1-1 and PDCCH 1-2 in the corresponding PDCCH 1.

Therefore, the determined PDCCH (carrying the PEI information) monitoring occasion and the paging occasion (PO) satisfy a certain time interval or minimum time interval therebeween, such that when it has a paging message to receive, the terminal device can receive enough SSBs within the certain time interval or minimum time interval, so as to achieve time-frequency synchronization.

Optionally, the number of paging occasions corresponding to the PDCCH may be determined according to the periodicity of the PDCCH.

For example, as shown in FIG. 11, a PDCCH carrying PEI information may correspond to 2 POs. This number can also be determined based on the periodicity of the PDCCH. For example, the periodicity of the PDCCH for scheduling SIB1 is 20 ms, then one PDCCH scheduling SIB1 and carrying PEI may correspond to the number of POs included within 20 ms.

It should be noted that when the multiplexing pattern of the SSB and the CORESET 0 is Pattern 1 (that is, the SSB and the CORESETO are time-division multiplexed), the periodicity of the search space of the PDCCH for scheduling the System Information Block (SIB) is 2 radio frames, that is, 20 ms. When the multiplexing pattern of the SSB and the CORESETO is Pattern 2 or 3 (that is, the SSB and the CORESETO are frequency-division multiplexed), the periodicity of the search space of the PDCCH for scheduling the SIB is equal to the periodicity of the SSB, which is 5ms, 10ms, 20ms ...160ms, with the SSB periodicity for initial access to a cell being typically 20ms. Therefore, based on the multiplexing pattern of the SSB and the CORESETO, the periodicity of the search space of the PDCCH for scheduling system information may be different. On the other hand, the number of paging occasions corresponding to a PDCCH for scheduling system information may also vary due to the configuration of paging occasions. For example, if the PDCCH monitoring times configured in the search space of the PDCCCH for scheduling the paging message are distributed densely in the time domain, then the number of paging occasions corresponding to the PDCCH will be relatively large. On the other hand, if the PDCCH monitoring times configured in the search space of PDCCCH for scheduling the paging message are distributed sparsely in the time domain, the number of paging occasions corresponding to the PDCCH will be relatively small. Furthermore, in the NR TDD system, the numbers of paging occasions corresponding to PDCCHs having different PDCCH periodicities for scheduling system information may also be different, since the TDD uplink-downlink configurations may be different in different PDCCH periodicities for scheduling system information, resulting in different numbers of POs actually distributed in different PDCCH periodicities for scheduling system information.

Thus, in embodiments of the present disclosure, the reserved bit(s) in the DCI for scheduling the system information may be used to carry the indication information (such as the PEI information) for indicating whether to monitor the paging message, so as to avoid monitoring the paging at the PO position when the terminal does not need to receive the paging message to achieve power saving. Additionally or alternatively, when the terminal device is in the RRC idle state or in the RRC inactive state, the network device can indicate the available reference signal to the terminal device, to assist the time-frequency synchronization of the terminal before receiving the paging message, thereby achieving power saving of the terminal as well and improving performance of communication.

Further, the technical solutions of the embodiments of the present disclosure reuse the existing DCI reserved bits, without increasing the resource overhead and network power consumption of the network to transmit the indication information (such as the PEI information), thereby improving network efficiency.

The method embodiments of the present disclosure have been described in detail above with reference to FIGS. 5-14, and the apparatus embodiments of the present disclosure will be described in detail below with reference to FIGS. 15-19. It can be appreciated that the apparatus embodiments and the method embodiments correspond to each other, and for similar descriptions, reference can be made to the method embodiments.

FIG. 15 shows a schematic block diagram of a terminal device 300 according to an embodiment of the present disclosure. As shown in FIG. 15, the terminal device 300 includes a processing unit 310.

The processing unit 310 is configured to receive indication information. The indication information indicates whether to monitor a paging message, and/or the indication information indicates an available reference signal.

Optionally, the indication information is carried in downlink control information (DCI) for scheduling system information.

Optionally, the indication information occupies part or all of reserved bits in the DCI.

Optionally, the reserved bits are not used for scheduling the system information.

Optionally, when the indication information indicates whether to monitor the paging message, the bits occupied by the indication information satisfy at least one of the following correspondences:
different bits in the bits occupied by the indication information correspond to different terminals;
different bits in the bits occupied by the indication information correspond to different terminal groups;
different bits in the bits occupied by the indication information correspond to different paging frames; or
different bits in the bits occupied by the indication information correspond to different paging occasions.

Optionally, when different bits in the bits occupied by the indication information correspond to different terminals, bit values of the bits occupied by the indication information indicate whether the corresponding terminals are to monitor the paging message; or
when different bits in the bits occupied by the indication information correspond to different terminal groups, bit values of the bits occupied by the indication information indicate whether terminals in the corresponding terminal groups are to monitor the paging message; or
when different bits in the bits occupied by the indication information correspond to different paging frames, bit values of the bits occupied by the indication information indicate whether the terminal device is to monitor the paging message on the corresponding paging frames; or
when different bits in the bits occupied by the indication information correspond to different paging occasions, bit values of the bits occupied by the indication information indicate whether the terminal device is to monitor the paging message in the corresponding paging occasions.

Optionally, when the indication information indicates whether to monitor the paging message, the bits occupied by the indication information include N groups of bits, and each of the N groups of bits includes M bits, where N and M are positive integers.

Each of the N groups of bits corresponds to one paging occasion, and each of the M bits corresponds to one terminal or one terminal group.

Optionally, bit values of the bits occupied by the indication information indicate whether the corresponding terminals or terminals in the corresponding terminal groups are to monitor the paging message in the corresponding paging occasions.

Optionally, the correspondence satisfied by the bits occupied by the indication information is preconfigured or agreed in a protocol, or the correspondence satisfied by the bits occupied by the indication information is configured by a network device via Radio Resource Control (RRC) signaling or broadcast signaling.

Optionally, the terminal groups are divided by:
determining indices of the terminal groups based on identifiers of terminals; or
determining indices of the terminal groups based on access classes of terminals.

Optionally, a bit position and/or a number of bits occupied by the indication information is preconfigured or agreed in a protocol, or a bit position and/or a number of bits occupied by the indication information is configured by a network device.

Optionally, a correspondence between a Physical Downlink Control Channel (PDCCH) carrying the DCI and a paging occasion indicated by the indication information is preconfigured or agreed in a protocol, or a correspondence between a PDCCH carrying the DCI and a paging occasion indicated by the indication information is configured by a network device.

Optionally, the correspondence between the PDCCH and the paging occasion indicated by the indicated information includes at least one of:
a time interval or a minimum time interval between a monitoring occasion of the PDCCH and the paging occasion indicated by the indicated information; or
a number of paging occasions corresponding to the PDCCH.

Optionally, the time interval or the minimum time interval between the monitoring occasion of the PDCCH and the paging occasion indicated by the indicated information includes one of:
the time interval or the minimum time interval between the monitoring occasion of the PDCCH and the paging occasion indicated by the indicated information;
a time interval or a minimum time interval between the monitoring occasion of the PDCCH and a first paging occasion indicated by the indicated information;
a time interval or a minimum time interval between the monitoring occasion of the PDCCH and a radio frame on which the paging occasion indicated by the indication information is located; or
a time interval or a minimum time interval between a radio frame on which the PDCCH is located and a radio frame on which the paging occasion indicated by the indication information is located.

Optionally, the number of paging occasions corresponding to the PDCCH is determined based on a PDCCH periodicity.

Optionally, the system information includes at least one of: System Information Block (SIB) 1, SIB 2, SIB 3, SIB 4, or Other System Information (OSI).

Optionally, the available reference signal is used for time-frequency synchronization and/or Radio Resource Management (RRM) measurement by the terminal device when receiving the paging message.

Optionally, the available reference signal includes an available reference signal from a plurality of reference signals, and configuration information for the plurality of reference signals is configured by a network device via system information or RRC signaling.

Optionally, the indication information is Paging Early Indication (PEI) information.

Optionally, the terminal device is in an idle state or an inactive state.

Optionally, in some embodiments, the above communication unit may be a communication interface or a transceiver, or an input/output interface of a communication chip or a system-on-chip. The above processing unit may be one or more processors.

It can be appreciated that the terminal device 300 according to the embodiment of the present disclosure may correspond to the terminal device in the method embodiment of the present disclosure, and the above and other operations and/or functions of the respective units in the terminal device 300 are provided for the purpose of implementing the process flow corresponding to the terminal device in the method 200 shown in FIG. 5, and details thereof will be not omitted here for brevity.

FIG. 16 shows a schematic block diagram of a network device 400 according to an embodiment of the present disclosure. As shown in FIG. 16, the network device 400 includes a communication unit 410.

The communication unit 410 is configured to transmit indication information. The indication information indicates whether to monitor a paging message, and/or the indication information indicates an available reference signal.

Optionally, the indication information is carried in downlink control information (DCI) for scheduling system information.

Optionally, the indication information occupies part or all of reserved bits in the DCI.

Optionally, the reserved bits are not used for scheduling the system information.

Optionally, when the indication information indicates whether to monitor the paging message, the bits occupied by the indication information satisfy at least one of the following correspondences:
different bits in the bits occupied by the indication information correspond to different terminals;
different bits in the bits occupied by the indication information correspond to different terminal groups;
different bits in the bits occupied by the indication information correspond to different paging frames; or
different bits in the bits occupied by the indication information correspond to different paging occasions.

Optionally, when different bits in the bits occupied by the indication information correspond to different terminals, bit values of the bits occupied by the indication information indicate whether the corresponding terminals are to monitor the paging message; or
when different bits in the bits occupied by the indication information correspond to different terminal groups, bit values of the bits occupied by the indication information indicate whether terminals in the corresponding terminal groups are to monitor the paging message; or
when different bits in the bits occupied by the indication information correspond to different paging frames, bit values of the bits occupied by the indication information indicate whether a terminal device is to monitor the paging message on the corresponding paging frames; or
when different bits in the bits occupied by the indication information correspond to different paging occasions, bit values of the bits occupied by the indication information indicate whether a terminal device is to monitor the paging message in the corresponding paging occasions.

Optionally, when the indication information indicates whether to monitor the paging message, the bits occupied by the indication information include N groups of bits, and each of the N groups of bits includes M bits, where N and M are positive integers;
wherein each of the N groups of bits corresponds to one paging occasion, and each of the M bits corresponds to one terminal or one terminal group.

Optionally, bit values of the bits occupied by the indication information indicate whether the corresponding terminals or terminals in the corresponding terminal groups are to monitor the paging message in the corresponding paging occasions.

Optionally, the correspondence satisfied by the bits occupied by the indication information is preconfigured or agreed in a protocol, or the correspondence satisfied by the bits occupied by the indication information is configured by a network device via Radio Resource Control (RRC) signaling or broadcast signaling.

Optionally, the terminal groups are divided by:
determining indices of the terminal groups based on identifiers of terminals; or
determining indices of the terminal groups based on access classes of terminals.

Optionally, a bit position and/or a number of bits occupied by the indication information is preconfigured or agreed in a protocol, or a bit position and/or a number of bits occupied by the indication information is configured by a network device.

Optionally, a correspondence between a Physical Downlink Control Channel (PDCCH) carrying the DCI and a paging occasion indicated by the indication information is preconfigured or agreed in a protocol, or a correspondence between a PDCCH carrying the DCI and a paging occasion indicated by the indication information is configured by a network device.

Optionally, the correspondence between the PDCCH and the paging occasion indicated by the indicated information includes at least one of:
a time interval or a minimum time interval between a monitoring occasion of the PDCCH and the paging occasion indicated by the indicated information; or
a number of paging occasions corresponding to the PDCCH.

Optionally, the time interval or the minimum time interval between the monitoring occasion of the PDCCH and the paging occasion indicated by the indicated information includes one of:
the time interval or the minimum time interval between the monitoring occasion of the PDCCH and the paging occasion indicated by the indicated information;
a time interval or a minimum time interval between the monitoring occasion of the PDCCH and a first paging occasion indicated by the indicated information;
a time interval or a minimum time interval between the monitoring occasion of the PDCCH and a radio frame on which the paging occasion indicated by the indication information is located; or
a time interval or a minimum time interval between a radio frame on which the PDCCH is located and a radio frame on which the paging occasion indicated by the indication information is located.

Optionally, the number of paging occasions corresponding to the PDCCH is determined based on a PDCCH periodicity.

Optionally, the system information includes at least one of: System Information Block (SIB) 1, SIB 2, SIB 3, SIB 4, or Other System Information (OSI).

Optionally, the available reference signal is used for time-frequency synchronization and/or Radio Resource Management (RRM) measurement by a terminal device when receiving the paging message.

Optionally, the available reference signal includes an available reference signal from a plurality of reference signals, and configuration information for the plurality of reference signals is configured by a network device via system information or RRC signaling.

Optionally, the indication information is Paging Early Indication (PEI) information.

Optionally, in some embodiments, the above communication unit may be a communication interface or a transceiver, or an input/output interface of a communication chip or a system-on-chip.

It can be appreciated that the network device 400 according to the embodiment of the present disclosure may correspond to the network device in the method embodiment of the present disclosure, and the above and other operations and/or functions of the respective units in the network device 400 are provided for the purpose of implementing the process flow corresponding to the network device in the method 200 shown in FIG. 5, and details thereof will be not omitted here for brevity.

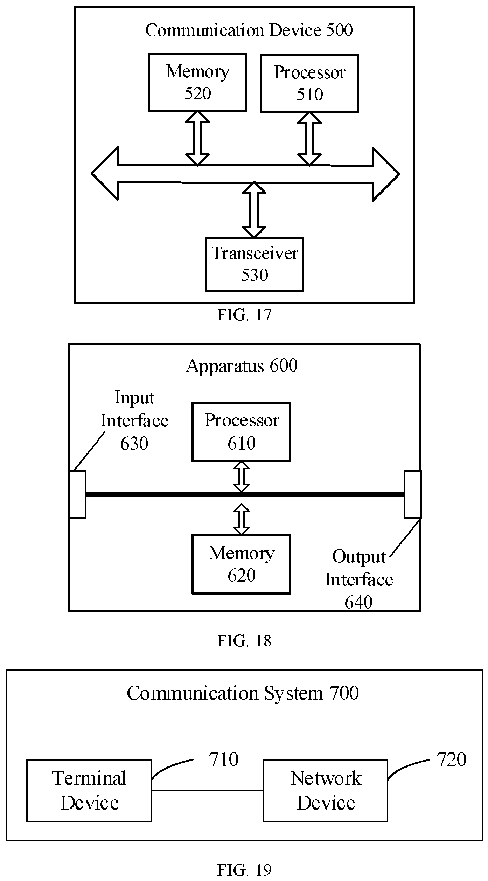

FIG. 17 is a schematic diagram showing a structure of a communication device 500 according to an embodiment of the present disclosure. The communication device 500 shown in FIG. 17 includes a processor 510, and the processor 510 can invoke and execute a computer program from a memory to implement the method in the embodiment of the present disclosure.

Optionally, as shown in FIG. 17, the communication device 500 may further include a memory 520. The processor 510 can invoke and execute a computer program from the memory 520 to implement the method in the embodiment of the present disclosure.

The memory 520 may be a separate device independent from the processor 510, or may be integrated in the processor 510.

Optionally, as shown in FIG. 17, the communication device 500 may further include a transceiver 530, and the processor 510 may control the transceiver 530 to communicate with other devices, and in particular, transmit information or data to other devices, or receive information or data transmitted by other devices.

Here, the transceiver 530 may include a transmitter and a receiver. The transceiver 530 may further include one or more antennas.

Optionally, the communication device 500 may specifically be the network device according to the embodiment of the present disclosure, and the communication device 500 may implement the corresponding processes implemented by the network device in any of the methods according to the embodiments of the present disclosure. For the sake of brevity, details thereof will be omitted here.

Optionally, the communication device 500 may specifically be the terminal device according to the embodiment of the present disclosure, and the communication device 500 may implement the corresponding processes implemented by the terminal device in any of the methods according to the embodiments of the present disclosure. For the sake of brevity, details thereof will be omitted here.

FIG. 18 is a schematic diagram showing a structure of an apparatus according to an embodiment of the present disclosure. The apparatus 600 shown in FIG. 18 includes a processor 610, and the processor 610 can invoke and execute a computer program from a memory to implement the method in the embodiment of the present disclosure.

Optionally, as shown in FIG. 18, the apparatus 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

Optionally, the apparatus 600 may further include an input interface 630. The processor 610 can control the input interface 630 to communicate with other devices or chips, and in particular, obtain information or data transmitted by other devices or chips.

Optionally, the apparatus 600 may further include an output interface 640. The processor 610 can control the output interface 640 to communicate with other devices or chips, and in particular, output information or data to other devices or chips.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the terminal device in the embodiment of the present disclosure, and the apparatus can implement the corresponding processes implemented by the terminal device in the various methods of the embodiments of the present disclosure. For the sake of brevity, details thereof will be omitted here.

Optionally, the apparatus in the embodiment of the present disclosure may be a chip, e.g., system-level chip, a system-chip, a chip system, or a system-on-chip.

FIG. 19 is a schematic block diagram showing a communication system 700 according to an embodiment of the present disclosure. As shown in FIG. 19, the communication system 700 includes a terminal device 710 and a network device 720.

Here, the terminal device 710 can be configured to implement the corresponding functions implemented by the terminal device in the above method, and the network device 720 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the terminal device in the embodiment of the present disclosure, and the computer program can cause a computer to perform corresponding procedures implemented by the terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the terminal device in the embodiment of the present disclosure, and the computer program instructions can cause a computer to perform corresponding procedures implemented by the terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the terminal device in the embodiment of the present disclosure. The computer program, when executed on a computer, can cause the computer to perform corresponding procedures implemented by the terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A wireless communication method, comprising:
receiving, by a terminal device, indication information, the indication information indicating whether to monitor a paging message, and/or the indication information indicating an available reference signal.

2. The method according to claim 1, wherein the indication information is carried in downlink control information (DCI) for scheduling system information.

3. The method according to claim 2, wherein the indication information occupies part or all of reserved bits in the DCI.

4. The method according to claim 3, wherein the reserved bits are not used for scheduling the system information.

5. The method according to claim 3 or 4, wherein when the indication information indicates whether to monitor the paging message, the bits occupied by the indication information satisfy at least one of the following correspondences:
different bits in the bits occupied by the indication information correspond to different terminals;
different bits in the bits occupied by the indication information correspond to different terminal groups;
different bits in the bits occupied by the indication information correspond to different paging frames; or
different bits in the bits occupied by the indication information correspond to different paging occasions.

6. The method according to claim 5, wherein
when different bits in the bits occupied by the indication information correspond to different terminals, bit values of the bits occupied by the indication information indicate whether the corresponding terminals are to monitor the paging message; or
when different bits in the bits occupied by the indication information correspond to different terminal groups, bit values of the bits occupied by the indication information indicate whether terminals in the corresponding terminal groups are to monitor the paging message; or
when different bits in the bits occupied by the indication information correspond to different paging frames, bit values of the bits occupied by the indication information indicate whether the terminal device is to monitor the paging message on the corresponding paging frames; or
when different bits in the bits occupied by the indication information correspond to different paging occasions, bit values of the bits occupied by the indication information indicate whether the terminal device is to monitor the paging message in the corresponding paging occasions.

7. The method according to claim 3 or 4, wherein when the indication information indicates whether to monitor the paging message, the bits occupied by the indication information include N groups of bits, and each of the N groups of bits includes M bits, where N and M are positive integers;
wherein each of the N groups of bits corresponds to one paging occasion, and each of the M bits corresponds to one terminal or one terminal group.

8. The method according to claim 7, wherein bit values of the bits occupied by the indication information indicate whether the corresponding terminals or terminals in the corresponding terminal groups are to monitor the paging message in the corresponding paging occasions.

9. The method according to any one of claims 5 to 8, wherein the correspondence satisfied by the bits occupied by the indication information is preconfigured or agreed in a protocol, or the correspondence satisfied by the bits occupied by the indication information is configured by a network device via Radio Resource Control (RRC) signaling or broadcast signaling.

10. The method according to any one of claims 5 to 9, wherein the terminal groups are divided by:
determining indices of the terminal groups based on identifiers of terminals; or
determining indices of the terminal groups based on access classes of terminals.

11. The method according to any one of claims 3 to 10, wherein a bit position and/or a number of bits occupied by the indication information is preconfigured or agreed in a protocol, or a bit position and/or a number of bits occupied by the indication information is configured by a network device.

12. The method according to any one of claims 2 to 11, wherein a correspondence between a Physical Downlink Control Channel (PDCCH) carrying the DCI and a paging occasion indicated by the indication information is preconfigured or agreed in a protocol, or a correspondence between a PDCCH carrying the DCI and a paging occasion indicated by the indication information is configured by a network device.

13. The method according to claim 12, wherein the correspondence between the PDCCH and the paging occasion indicated by the indicated information comprises at least one of:
a time interval or a minimum time interval between a monitoring occasion of the PDCCH and the paging occasion indicated by the indicated information; or
a number of paging occasions corresponding to the PDCCH.

14. The method according to claim 13, wherein the time interval or the minimum time interval between the monitoring occasion of the PDCCH and the paging occasion indicated by the indicated information comprises one of:
the time interval or the minimum time interval between the monitoring occasion of the PDCCH and the paging occasion indicated by the indicated information;
a time interval or a minimum time interval between the monitoring occasion of the PDCCH and a first paging occasion indicated by the indicated information;
a time interval or a minimum time interval between the monitoring occasion of the PDCCH and a radio frame on which the paging occasion indicated by the indication information is located; or
a time interval or a minimum time interval between a radio frame on which the PDCCH is located and a radio frame on which the paging occasion indicated by the indication information is located.

15. The method according to claim 13, wherein the number of paging occasions corresponding to the PDCCH is determined based on a PDCCH periodicity.

16. The method according to any one of claims 2 to 15, wherein the system information comprises at least one of:
System Information Block (SIB) 1, SIB 2, SIB 3, SIB 4, or Other System Information (OSI).

17. The method according to any one of claims 1 to 16, wherein the available reference signal is used for time-frequency synchronization and/or Radio Resource Management (RRM) measurement by the terminal device when receiving the paging message.

18. The method according to any one of claims 1 to 17, wherein the available reference signal comprises an available reference signal from a plurality of reference signals, and configuration information for the plurality of reference signals is configured by a network device via system information or RRC signaling.

19. The method according to any one of claims 1 to 18, wherein the indication information is Paging Early Indication (PEI) information.

20. The method according to any one of claims 1 to 19, wherein the terminal device is in an idle state or an inactive state.

21. A wireless communication method, comprising:
transmitting, by a network device, indication information, the indication information indicating whether to monitor a paging message, and/or the indication information indicating an available reference signal.

22. The method according to claim 21, wherein the indication information is carried in downlink control information (DCI) for scheduling system information.

23. The method according to claim 22, wherein the indication information occupies part or all of reserved bits in the DCI.

24. The method according to claim 23, wherein the reserved bits are not used for scheduling the system information.

25. The method according to claim 23 or 24, wherein when the indication information indicates whether to monitor the paging message, the bits occupied by the indication information satisfy at least one of the following correspondences:
different bits in the bits occupied by the indication information correspond to different terminals;
different bits in the bits occupied by the indication information correspond to different terminal groups;
different bits in the bits occupied by the indication information correspond to different paging frames; or
different bits in the bits occupied by the indication information correspond to different paging occasions.

26. The method according to claim 25, wherein
when different bits in the bits occupied by the indication information correspond to different terminals, bit values of the bits occupied by the indication information indicate whether the corresponding terminals are to monitor the paging message; or
when different bits in the bits occupied by the indication information correspond to different terminal groups, bit values of the bits occupied by the indication information indicate whether terminals in the corresponding terminal groups are to monitor the paging message; or
when different bits in the bits occupied by the indication information correspond to different paging frames, bit values of the bits occupied by the indication information indicate whether a terminal device is to monitor the paging message on the corresponding paging frames; or
when different bits in the bits occupied by the indication information correspond to different paging occasions, bit values of the bits occupied by the indication information indicate whether a terminal device is to monitor the paging message in the corresponding paging occasions.

27. The method according to claim 23 or 24, wherein when the indication information indicates whether to monitor the paging message, the bits occupied by the indication information include N groups of bits, and each of the N groups of bits includes M bits, where N and M are positive integers;
wherein each of the N groups of bits corresponds to one paging occasion, and each of the M bits corresponds to one terminal or one terminal group.

28. The method according to claim 27, wherein bit values of the bits occupied by the indication information indicate whether the corresponding terminals or terminals in the corresponding terminal groups are to monitor the paging message in the corresponding paging occasions.

29. The method according to any one of claims 25 to 28, wherein the correspondence satisfied by the bits occupied by the indication information is preconfigured or agreed in a protocol, or the correspondence satisfied by the bits occupied by the indication information is configured by a network device via Radio Resource Control (RRC) signaling or broadcast signaling.

30. The method according to any one of claims 25 to 29, wherein the terminal groups are divided by:
determining indices of the terminal groups based on identifiers of terminals; or
determining indices of the terminal groups based on access classes of terminals.

31. The method according to any one of claims 23 to 30, wherein a bit position and/or a number of bits occupied by the indication information is preconfigured or agreed in a protocol, or a bit position and/or a number of bits occupied by the indication information is configured by a network device.

32. The method according to any one of claims 22 to 31, wherein a correspondence between a Physical Downlink Control Channel (PDCCH) carrying the DCI and a paging occasion indicated by the indication information is preconfigured or agreed in a protocol, or a correspondence between a PDCCH carrying the DCI and a paging occasion indicated by the indication information is configured by a network device.

33. The method according to claim 32, wherein the correspondence between the PDCCH and the paging occasion indicated by the indicated information comprises at least one of:
a time interval or a minimum time interval between a monitoring occasion of the PDCCH and the paging occasion indicated by the indicated information; or
a number of paging occasions corresponding to the PDCCH.

34. The method according to claim 33, wherein the time interval or the minimum time interval between the monitoring occasion of the PDCCH and the paging occasion indicated by the indicated information comprises one of:
the time interval or the minimum time interval between the monitoring occasion of the PDCCH and the paging occasion indicated by the indicated information;
a time interval or a minimum time interval between the monitoring occasion of the PDCCH and a first paging occasion indicated by the indicated information;
a time interval or a minimum time interval between the monitoring occasion of the PDCCH and a radio frame on which the paging occasion indicated by the indication information is located; or
a time interval or a minimum time interval between a radio frame on which the PDCCH is located and a radio frame on which the paging occasion indicated by the indication information is located.

35. The method according to claim 33, wherein the number of paging occasions corresponding to the PDCCH is determined based on a PDCCH periodicity.

36. The method according to any one of claims 22 to 35, wherein the system information comprises at least one of:
System Information Block (SIB) 1, SIB 2, SIB 3, SIB 4, or Other System Information (OSI).

37. The method according to any one of claims 21 to 36, wherein the available reference signal is used for time-frequency synchronization and/or Radio Resource Management (RRM) measurement by a terminal device when receiving the paging message.

38. The method according to any one of claims 21 to 37, wherein the available reference signal comprises an available reference signal from a plurality of reference signals, and configuration information for the plurality of reference signals is configured by a network device via system information or RRC signaling.

39. The method according to any one of claims 21 to 38, wherein the indication information is Paging Early Indication (PEI) information.

40. A terminal device, comprising:
a communication unit configured to receive indication information, the indication information indicating whether to monitor a paging message, and/or the indication information indicating an available reference signal.

41. A network device, comprising:
a communication unit configured to transmit indication information, the indication information indicating whether to monitor a paging message, and/or the indication information indicating an available reference signal.

42. A terminal device, comprising: a processor and a memory, wherein the memory has a computer program stored thereon, and the processor is configured to invoke and execute the computer program stored in the memory to perform the method according to any one of claims 1 to 20.

43. A network device, comprising: a processor and a memory, wherein the memory has a computer program stored thereon, and the processor is configured to invoke and execute the computer program stored in the memory to perform the method according to any one of claims 21 to 39.

44. A chip, comprising: a processor configured to invoke and execute a computer program from a memory, to cause a device provided with the chip to perform the method according to any one of claims 1 to 20.

45. A chip, comprising: a processor configured to invoke and execute a computer program from a memory, to cause a device provided with the chip to perform the method according to any one of claims 21 to 39.

46. A computer-readable storage medium, storing a computer program that causes a computer to perform the method according to any one of claims 1 to 20.

47. A computer-readable storage medium, storing a computer program that causes a computer to perform the method according to any one of claims 21 to 39.

48. A computer program product, comprising computer program instructions that cause a computer to perform the method according to any one of claims 1 to 20.

49. A computer program product, comprising computer program instructions that cause a computer to perform the method according to any one of claims 21 to 39.

50. A computer program, causing a computer to perform the method according to any one of claims 1 to 20.

51. A computer program, causing a computer to perform the method according to any one of claims 21 to 39.
